# EUROPÄISCHE PATENTSCHRIFT

(11) **EP 3 061 041 B1**
(45) Veröffentlichungstag und Bekanntmachung des Hinweises auf die Patenterteilung: **06.12.2017**
(21) Anmeldenummer: 14761827.6
(22) Anmeldetag: 05.09.2014
(51) Int. Cl.: G06K 19/073

(54) **DOKUMENT MIT EINER KONTAKTLOSEN CHIPKARTENSCHNITTSTELLE UND ELEKTRONISCHES SYSTEM**
DOCUMENT WITH CONTACTLESS CHIP CARD INTERFACE AND ELECTRONIC SYSTEM
DOCUMENT AVEC INTERFACE CARTE A PUCE SANS CONTACT ET SYSTEME ELECTRONIQUE

(30) Priorität: 25.10.2013 DE 102013221769
(43) Veröffentlichungstag der Anmeldung: 31.08.2016
(73) Patentinhaber: Bundesdruckerei GmbH, 10969 Berlin (DE)
(72) Erfinder: SCHWAN, Matthias, 10437 Berlin (DE); RABELER, Uwe, 30453 Hannover (DE); WOLF, Andreas, 07743 Jena (DE)
(74) Vertreter: Richardt Patentanwälte PartG mbB
(86) Internationale Anmeldenummer: PCT/EP2014/069003
(87) Internationale Veröffentlichungsnummer: WO 2015/058894

(56) Entgegenhaltungen:
- DE-A1-102010 020 460

## Beschreibung

Die vorliegend Erfindung betrifft ein Dokument mit einer kontaktlosen Chipkartenschnittstelle, wie zum Beispiel ein elektronisches Ausweisdokument, sowie ein entsprechendes elektronisches System.

Aus dem Stand der Technik ist das Basic Access Control (BAC) -Verfahren bekannt, welches dazu dient, dass sensible Daten nicht ohne Einwilligung des Inhabers eines maschinenlesbaren Reisedokuments ausgelesen werden können. Das entsprechende Authentifizierungsverfahren zwischen einem Lesegerät und dem maschinenlesbaren Reisedokument basiert auf einer Challenge-Response-Authentifizierung.

Der Stand der Technik umfasst ferner ein Sicherheits- oder Wertdokument, Verfahren zu dessen Herstellung und zu dessen Verifikation (DE 10 2010 020 460 A1), worin Maßnahmen gegen die unbefugte Manipulation eines in das Sicherheits- oder Wertdokument eingebetteten integrierten elektronischen Schaltkreises beschrieben sind.

Der Erfindung liegt demgegenüber die Aufgabe zugrunde, ein verbessertes Dokument sowie ein entsprechendes elektronisches System nach Anspruch 1 und Anspruch 14 zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Dokument" wird hier insbesondere ein tragbare Vorrichtung verstanden, welche zumindest einen Datenspeicher zur Speicherung des zumindest einen Attributs und eine kontaktlose Chipkartenschnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem Dokument um ein Wert- oder Sicherheitsdokument handeln. Unter einem "Dokument" werden erfindungsgemäß insbesondere papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einer "kontaktlosen Chipkartenschnittstelle" wird hier eine für Chipkarten geeignete kontaktlose Schnittstelle verstanden, die sowohl zur Kommunikation mit einem Lesegerät als auch zur Einkopplung von elektromagnetischer Energie für die Energieversorgung des Dokuments dient, insbesondere zur Energieversorgung des Prozessors und/oder des Sensors des Dokuments. Insbesondere kann die kontaktlose Chipkartenschnittstelle für eine elektromagnetische Kopplung mit einer entsprechenden Schnittstelle des Lesegeräts ausgebildet sein, insbesondere als ein sogenanntes RF-Interface (vergleiche hierzu Handbuch der Chipkarten, Wolfgang Rankl, Wolfgang Effing, Carl Hanser Verlag München, 2008, Seite 26, Kapitel 2.3.4), beispielsweise als RFID-Schnittstelle oder als NFC-Schnittstelle (vergleiche hierzu RFID-Handbuch, Klaus Finkenzeller, Carl Hanser Verlag München, 2008, insbesondere Seite 7 ff unter 1.3 und Seite 64ff unter 3.4).

Insbesondere kann die kontaktlose Chipkartenschnittstelle zur elektromagnetischen Kopplung im Nahfeld ausgebildet sein, beispielsweise gemäß ISO/IEC14443 (Identification Card - Proximity Integrated Circuit Card), wobei die Reichweite einer solchen kontaktlosen Chipkarten-Schnittstelle im allgemeinen höchstens 15 cm, vorzugsweise höchstens 10 cm beträgt, vgl. dazu auch RFID-Handbuch, Klaus Finkenzeller, Carl Hanser Verlag München, 2008, insbesondere Seiten 276 ff und 9.2.2.

Unter einem "Request-Response Übertragungsprotokoll" wird hier ein Übertragungsprotokoll insbesondere zur Übertragung von Anwendungsdaten verstanden, bei dem das Lesegerät die Rolle des Master und das Dokument die Rolle des Slave einnimmt, das heißt das Dokument sendet nur dann eine Nachricht, d.h. eine "Response", wenn es zuvor eine entsprechende Anforderung, das heißt ein Kommando ("Request") empfangen hat. Ein Beispiel für ein solches Übertragungsprotokoll beinhaltet ISO/IEC 7816, Teil 4.

Unter einem "Prozessor" wird hier ein logischer Schaltkreis zur Ausführung von Programminstruktionen verstanden, der ein oder mehrere Prozessorkerne beinhalten kann.

Unter einer ersten "Übertragungsprotokollkomponente zum Senden von Protokollparametern" wird hier ein Programmmodul zur Ausführung durch einen Prozessor des Dokuments verstanden, der zur Protokollaktivierung eines Protokolls der Chipkarten-Schnittstelle dient. Durch die Protokollaktivierung werden Protokollparameter von dem Dokument an das Lesegerät kommuniziert, die für die anschließende Durchführung des Protokolls erforderlich sind, um damit beispielsweise einen sog. transport layer für die Übertragung aufzubauen. Diese Übertragungsprotokollkomponente kann beispielsweise gemäß ISO/IEC 14443 implementiert sein. Hierbei fordert das Lesegerät z.B. den sogenannten ATS (Answer to Select) des Dokuments durch Aussenden eines RATS-Kommandos (Request for Answer to Select) an. Das aufgrund des RATS-Kommandos gesendete ATS beinhaltet verschiedene Protokollparameter (vergleiche RFID-Handbuch, Klaus Finkenzeller, Carl Hanser Verlag München, 2008, insbesondere Seiten Seite 289, 290).

Unter einer zweiten "Übertragungsprotokollkomponente zur Übertragung von Anwendungsdaten" wird hier ein Programmmodul zur Ausführung durch den Prozessor des Dokuments verstanden, welches zur Durchführung eines Protokolls zur Kommunikation von beliebigen Anwendungsdaten in Form von Kommando-Antwort-Paaren (Command-Response-Pairs) dient, nachdem das Protokoll mit Hilfe der Protokollparameter initialisiert worden ist. Insbesondere werden die Daten in Form von APDUs (APDU = Application Data Unit) zwischen dem Lesegerät und dem Dokument übertragen, beispielsweise gemäß ISO/IEC 7816-4 (vergleiche RFID-Handbuch, Klaus Finkenzeller, Carl Hanser Verlag München, 2008, insbesondere Seiten Seite 291 unter 9.2.2.4.2). Beispielsweise wird hierdurch der sog. application layer aufgebaut, was im allgemeinen den vorhergehenden Aufbau des transport layers voraussetzt.

Unter einem "Sensor" wird hier eine Vorrichtung verstanden, die zur Erfassung eines Umgebungszustands des Dokuments ausgebildet ist sowie zur Abgabe eines diesen Umgebungszustand anzeigenden Sensorsignals. Bei dem Umgebungszustand kann es sich um einen physikalischen Parameter der Umgebung des Dokuments oder des Sensors handeln, insbesondere auch um den zeitlichen Verlauf eines solchen Parameters.

Beispielsweise kann es sich bei dem physikalischen Parameter um die Frequenz, spektrale Verteilung, Intensität, Modulation und/oder den zeitlichen Verlauf von auf den Sensor einfallende Strahlung oder eines elektromagnetischen Feldes handeln. Der Sensor kann auch als mechanischer Sensor ausgebildet sein, um beispielsweise zu signalisieren, ob das Dokument in ein Lesegerät eingeführt worden ist und/oder ob das Dokument aufgeschlagen worden ist, sofern es sich um ein buchförmiges Dokument, wie zum Beispiel ein Passbuch, handelt.

Zu dem Sensor kann ein Programmmodul gehören, welches das Sensorsignal aufgrund des von dem Sensor erfassten Umgebungszustands erzeugt, wobei das Programmmodul von dem Sensor selbst oder dem Prozessor ausgeführt werden kann. Je nach Ausführungsform kann der Sensor mit oder ohne Logikschaltung zur Ausführung des Programmmoduls als diskrete Komponente oder als Teil der integrierten elektronischen Schaltung, die auch den Prozessor sowie die Speicher beinhaltet, ausgebildet sein.

Unter einem "Freigabezustand" wird ein Zustand verstanden, der einen ersten oder einen zweiten logischen Wert annehmen kann, wobei der erste logische Wert eine Sperrung der Ausführung der ersten und/oder zweiten Übertragungsprotokollkomponenten angibt und der zweite logischen Wert eine Freigabe für die Ausführung der ersten und zweiten Übertragungsprotokollkomponenten angibt. Wenn das Dokument in die Reichweite des Lesegeräts gebracht wird, hat der Freigabezustand initial den ersten logischen Wert, um zunächst keine Antwort des Dokuments auf Kommandos zu ermöglichen. Der Freigabezustand kann beispielsweise logisch 0 sein, was die Sperrung angibt, oder logisch 1, was die Freigabe angibt. Der zweite logische Wert kann auch ein Zahlenwert sein, der eine Anzahl von Antworten, für die die Freigabe erteilt ist, oder einen Timerwert zur Angabe einer Zeitdauer für die die Freigabe erteilt ist, angibt.

Nach Ausführungsformen der Erfindung reagiert das Dokument auf ein Initialisierungskommando, ein Lesekommando und/oder auch ein anderes Kommando nicht, solange in dem flüchtigen Speicher des Dokuments nicht der zweite logische Wert des Freigabezustands für die Freigabe der Ausführung der Übertragungsprotokollkomponenten insbesondere für die Initialisierung des Übertragungsprotokolls gespeichert ist. Solange nämlich der zweite logische Wert des Freigabezustands in dem flüchtigen Speicher nicht gespeichert ist, kann das Betriebssystem die Übertragungsprotokollkomponente zum Senden von Protokollparametern nicht starten, sodass das Übertragungsprotokoll nicht initialisiert wird und dadurch auch keine Antwort des Dokuments zum Beispiel auf ein Lesekommando erfolgen kann. Insbesondere reagiert das Dokument auch nicht auf Kommandos zum Auslesen chipindividueller Daten, wie z.8. READ BINARY Kommando APDU auf EF.Info, EF.DIR oder EF.CardAccess, solange der zweite logische Wert des Freigabezustand nicht in dem flüchtigen Speicher gespeichert ist.

Je nach Ausführungsform kann sich der Freigabezustand auf sowohl die ersten und zweiten Übertragungsprotokollkomponenten oder alternativ nur die zweite Übertragungsprotokollkomponente beziehen. In dem letzteren Fall kann also der transport layer aufgebaut werden, da das Dokument die Protokollparameter senden kann; es erfolgt aber seitens des Dokuments keine Antwort auf eine Kommando APDU, solange in dem flüchtigen Speicher des Dokuments nicht der zweite logische Wert des Freigabezustands gespeichert ist.

Zur Verwendung des Dokuments muss zunächst der Umgebungszustand so beschaffen sein, dass der Sensor ein Sensorsignal abgibt, das das Vorliegen eines vordefinierten Umgebungszustands anzeigt. Es reicht also nicht aus, dass das Dokument in dem Lesebereich eines Lesegeräts eingebracht wird, sodass elektrische Energie von dem Lesegerät zur Energieversorgung des Dokuments eingekoppelt wird und damit der Prozessor beginnt zu arbeiten. Zusätzlich muss die Bedingung erfüllt sein, dass der Umgebungszustand des Dokuments so geartet ist, dass der Sensor das Sensorsignal abgibt und dadurch in dem flüchtigen Speicher der zweite logische Wert des Freigabezustand gespeichert wird. Nur wenn auch dies der Fall ist, kann das Dokument auf ein Kommando überhaupt reagieren; ist der zweite logische Wert des Freigabezustand nicht gespeichert, sondern hat der Freigabezustand seinen ersten logischen Wert, erfolgt hingegen gar keine Antwort durch das Dokument.

Ausführungsformen der Erfindung sind besonders vorteilhaft, da es die Erfindung ermöglicht, für einen verbesserten Schutz der Privatsphäre des Nutzers zu sorgen, indem nicht nur das Auslesen von Attributen des Nutzers aus dem Dokument durch ein kryptografisches Protokoll geschützt ist, sondern auch das Auslesen nicht personengebundener Daten des Dokuments, nämlich chipspezifischer Daten, insbesondere der Protokollparameter für die Initialisierung des Übertragungsprotokolls.

Je nach Ausführungsform antwortet der Chip nicht auf fehlerhafte Kommandos des Lesegeräts mit entsprechenden Fehlermeldungen.

Auch aus solchen Protokollparametern und Fehlermeldungen könnten nämlich durch einen Angreifer Rückschlüsse zum Beispiel auf die Nationalität oder den Ausstellungszeitraum des Dokuments gezogen werden. Diesbezüglich kann bereits die Initialisierung des Übertragungsprotokolls aufgrund chipspezifischer physikalischer Signalmodulationseigenschaften ein Rückschluss zum Beispiel auf den Hardwarehersteller und damit die Nationalität oder den Ausstellungszeitraum des Dokuments gezogen werden. Fehlermeldungen hingegen sind oft nicht durch Standards spezifiziert und sind daher für das Betriebssystem des Dokuments kennzeichnend; dies wird auch als chip operating system fingerprint bezeichnet.

Ferner kann durch die Erfindung unterbunden werden, dass durch einen Angreifer die Anwesenheit eines Nutzers mit dem Dokument sensiert werden kann, da das Dokument überhaupt nicht auf Kommandos des Angreifers antwortet, solange der Umgebungszustand nicht hergestellt ist, der zu der Abgabe des Sensorsignals führt, solange also beispielsweise das Dokument nicht in ein entsprechendes Lesegerät eingeführt oder aufgelegt worden ist oder solange der Nutzer das Dokument nicht aufgeschlagen hat, sofern es sich um ein buchförmiges Dokument handelt. Aufgrund dieser zusätzlichen Sicherung des Dokuments wird es ferner möglich, eine größere Reichweite der kontaktlosen Chipkarten-Schnittstelle zuzulassen.

Nach einer Ausführungsform der Erfindung ist das Chipkartenbetriebssystem zur Erzeugung eines Fehlersignals als Antwort auf ein empfangenes ungültiges Kommando ausgebildet. Eine solche Antwort auf ein ungültiges Kommando wird aber von dem Dokument nicht gesendet, wenn der zweite logische Wert des Freigabezustand in dem flüchtigen Speicher nicht gespeichert ist. Hierdurch wird ein Angriff zur Detektion eines Dokuments unterbunden, da auf ein ungültiges Kommando, das von dem Lesegerät eines Angreifers abgesendet wird, keinerlei Antwort durch das Dokument erfolgt, wenn der für eine Antwort erforderliche Umgebungszustand des Dokuments nicht besteht.

Nach einer Ausführungsform der Erfindung wird der Freigabezustand in dem flüchtigen Speicher nach dem Senden jeder Antwort von dem Chipkartenbetriebssystem auf seinen ersten Wert zurückgesetzt, sodass nach dem Empfang eines weiteren Kommandos zunächst der Umgebungszustand von dem Sensor erfasst und das Sensorsignal abgegeben werden muss, damit das Betriebssystem wieder den zweiten Wert des Freigabezustand in dem flüchtigen Speicher speichern kann, um damit das Senden einer Antwort auf das Kommando zu ermöglichen.

Alternativ kann das Dokument einen Zähler beinhalten, der eine Höchstanzahl von Antworten definiert, die nach der Speicherung des Freigabezustands hintereinander von dem Dokument gesendet werden können bis der Freigabezustand wieder auf "gesperrt" zurückgesetzt ist. Beispielsweise wird diese Höchstanzahl zur Speicherung des Freigabezustands in dem flüchtigen Speicher gespeichert, nachdem das entsprechende Sensorsignal empfangen worden ist, das das Vorliegen des Umgebungszustands anzeigt. Nachfolgend wird dann diese Höchstanzahl mit jeder Sendung einer Antwort durch das Betriebssystem dekrementiert, bis der Zählerwert Null erreicht ist, der die Sperrung der Übertragungsprotokollkomponenten anzeigt.

Wenn beispielsweise für die Durchführung des kryptografischen Protokolls zum Lesen des zumindest einen Attributs aus dem Dokument eine Mindestanzahl von Antworten des Dokuments auf entsprechende Kommandos des Lesegeräts erforderlich ist, so wird diese Höchstanzahl, die bei der Freigabe initial in dem flüchtigen Speicher durch das Betriebssystem gespeichert wird, dementsprechend gewählt, dass diese Mindestanzahl von Antworten erfolgen kann, ohne dass erneut der Umgebungszustand erfasst werden muss.

Nach einer Ausführungsform der Erfindung ist das Betriebssystem zur Erfassung des zeitlichen Abstands zwischen aufeinanderfolgenden Kommandos, die zur Durchführung des kryptografischen Protokolls empfangen werden, ausgebildet. Das Lesegerät vergleicht jeden erfassten zeitlichen Abstand mit einem vorgegebenen Schwellwert. Wenn der zeitliche Abstand einen Schwellwert überschreitet, so setzt das Betriebssystem den Freigabezustand auf gesperrt, wie zum Beispiel "0" zurück, um die Durchführung des kryptografischen Protokolls abzubrechen. Dies trägt dem Umstand Rechnung, dass die aufeinanderfolgenden Kommandos eines validen und autorisierten Lesegeräts einen bestimmten zeitlichen Abstand nicht überschreiten. Wird dieser zeitliche Abstand doch überschritten, so deutet dies auf einen Angriffsversuch hin.

Nach einer Ausführungsform der Erfindung ist der in dem flüchtigen Speicher gespeicherte Freigabezustand, beispielsweise "logisch 1", für eine vorgegebene Zeitdauer gültig. Beispielsweise beinhaltet das Dokument einen Timer, der mit der Speicherung des Freigabezustands "logisch 1" in dem flüchtigen Speicher von dem Betriebssystem gestartet wird. Sobald der Timer einen vorgegebenen Wert erreicht hat, wird der Freigabezustand auf gesperrt, das heißt "logisch 0", zurückgesetzt.

Nach einer Ausführungsform der Erfindung ist das Dokument buchförmig, beispielsweise als Passbuch ausgebildet. Der Sensor befindet sich dann auf einer Seite des Passbuchs, wobei der Sensor als Magnetsensor zur Sensierung eines magnetischen Feldes ausgebildet ist. Eine andere Seite des Dokuments oder der Einbanddeckel des Dokuments trägt einen Permanentmagneten, der im geschlossen Zustand des Dokuments den Sensor mit einem magnetischen Feld beaufschlagt. Solange sich der Sensor in dem magnetischen Feld befindet, das heißt, solange das Dokument geschlossen ist, gibt der Sensor das Sensorsignal zur Auslösung der Speicherung des Freigabezustands durch das Betriebssystem nicht ab. Sobald sich aber der Umgebungszustand ändert, der Sensor nämlich aus dem magnetischen Feld entfernt wird, indem das Dokument aufgeschlagen wird, gibt der Sensor das Sensorsignal ab, sodass der Freigabezustand in dem flüchtigen Speicher gespeichert wird, sofern sich das Dokument in der Reichweite eines Lesegeräts befindet. Dadurch wird die Initialisierung des Übertragungsprotokolls und die nachfolgende Durchführung des kryptografischen Protokolls zum Lesen des zumindest einen Attributs aus dem Dokument ermöglicht.

In einem weiteren Aspekt betrifft die Erfindung ein elektronisches System mit einem erfindungsgemäßen Dokument und einem Lesegerät, welches eine kontaktlose Schnittstelle hat, um mit der kontaktlosen Schnittstelle des Dokuments nach dem Übertragungsprotokoll zu kommunizieren.

Nach einer Ausführungsform der Erfindung hat das Lesegerät einen Signalgeber, der dazu ausgebildet ist, das Sensorsignal des Sensors auszulösen. Bei dem Signalgeber kann es sich beispielsweise um eine Strahlungsquelle handeln. Sobald das Dokument in das Lesegerät eingeführt wird oder auf das Lesegerät aufgelegt wird, wird das Dokument, das heißt dessen Sensor, von dem Signalgeber des Lesegeräts beaufschlagt, sodass sich ein bestimmter Umgebungszustand einstellt, der von dem Sensor erfasst wird und zur Abgabe des Sensorsignals führt, sodass das Betriebssystem dann den Freigabezustand in dem flüchtigen Speicher speichert.

Im Weiteren werden Ausführungsformen der Erfindung mit Bezugnahme auf die Zeichnungen näher erläutert. Es zeigen:
- Figur 1: eine Anordnung einer ersten Ausführungsform eines erfindungsgemäßen elektronischen Systems,
- Figur 2: ein Flussdiagramm einer Ausführungsform eines erfindungsgemäßen Dokuments,
- Figur 3: ein Flussdiagramm einer weiteren Ausführungsform eines erfindungsgemäßen Dokuments,
- Figur 4: eine Ausführungsform eines buchförmigen erfindungsgemäßen Dokuments,
- Figur 5: eine Ausführungsform eines erfindungsgemäßen buchförmigen Dokuments in einer Draufsicht,
- Figur 6: eine Ausführungsform eines aufgeschlagenen buchförmigen Dokuments in einer Ansicht von oben.

Elemente der nachfolgenden Ausführungsformen, die einander entsprechen oder identisch sind, werden mit identischen Bezugszeichen gekennzeichnet.

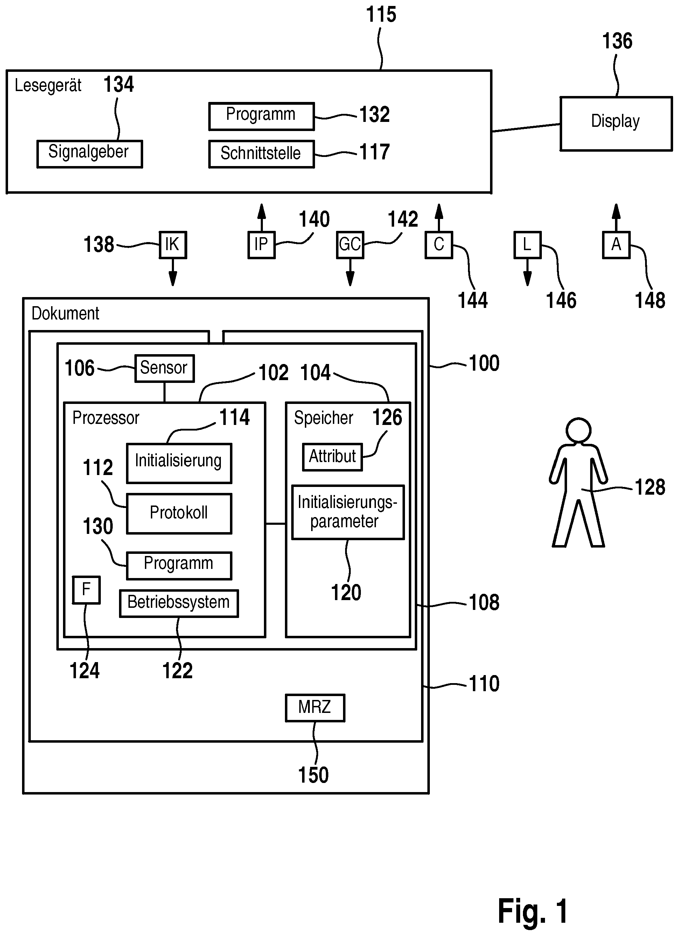

Die Figur 1 zeigt ein Dokument 100, das zum Beispiel als Chipkarte ausgebildet sein kann. Insbesondere kann es sich bei dem Dokument 100 um einen elektronischen Personalausweis handeln.

Das Dokument 100 hat einen Prozessor 102, einen nicht-flüchtigen elektronischen Speicher 104 und einen Sensor 106. Diese Komponenten können in einer einzigen elektronischen Schaltung, das heißt einem Chip 108, integriert sein, wie in der Figur 1 gezeigt oder sie können als separate diskrete oder gedruckte Komponenten auf oder in dem Dokument realisiert sein.

Das Dokument 100 hat eine kontaktlose Chipkarten-Schnittstelle, die unter anderem durch eine Antenne 110 und ein Programmmodul 112, welches ein Request-Response-Übertragungsprotokoll implementiert, gebildet wird. Zu der kontaktlosen Chipkarten-Schnittstelle gehört ferner ein Programmmodul 114, welches zur Initialisierung des Übertragungsprotokolls dient.

Ein Lesegerät 115 hat eine entsprechende kontaktlose Chipkarten-Schnittstelle 117 zur Einkopplung von Energie in die Antenne 110, das heißt für die Energieversorgung des Chips 108 sowie für eine Request-Response-Kommunikation mit dem Dokument 100 nach dem Übertragungsprotokoll und die Initialisierung dieses Übertragungsprotokolls. Beispielsweise kann es sich bei dem Obertragungsprotokoll um ein in ISO/IEC 14443-4 beschriebenes Protokoll handeln.

In dem nicht-flüchtigen Speicher 104 sind Initialisierungsparameter 120 zur Initialisierung des Übertragungsprotokolls gespeichert. Diese Initialisierungsparameter 120 überträgt das Dokument 100 als Antwort auf ein Initialisierungskommando des Lesegeräts 115 an das Lesegerät 115, damit die nachfolgende Kommunikation gemäß dieser Initialisierungsparameter 120 durchgeführt wird.

Der Sensor 106 des Dokuments 100 dient zur Erfassung eines Umgebungszustands des Dokuments, das heißt zur Erfassung eines physikalischen Parameters. Beispielsweise kann es sich bei dem Sensor 106 um einen optischen, magnetischen oder mechanischen Sensor handels. Wenn ein vorgegebener Umgebungszustand vorliegt, das heißt beispielsweise der Sensor 106 mit einer Strahlung oder einem Magnetfeld, einer Kraft oder einem Druck beaufschlagt wird, so führt dies zur Abgabe eines Sensorsignals an ein Chipkartenbetriebssystem 122 des Dokuments 100.

Der Prozessor 102 beinhaltet einen flüchtigen Speicher 124, beispielsweise eine Speicheradresse in dem Arbeitsspeicher (RAM) des Prozessors 102, in dem ein Freigabezustand F, der die Sperrung oder die Freigabe der Programmmodule 112 und 114 angibt, gespeichert ist. Beispielsweise kann der Wert von F logisch 0 oder logisch 1 betragen, wobei eine logische 0 die Sperrung und eine logische 1 die Freigabe für die Ausführung der Programmmodule 112 und 114 angibt. Der initiale Zustand von F ist dabei die Sperrung, die zunächst von dem Chipkartenbetriebssystem 122 aufgehoben werden muss, damit die Programmmodule 112 und 114 ausgeführt werden können.

In dem Speicher 104 des Dokuments ist zumindest ein Attribut 126 eines Nutzers 128 gespeichert. Der Nutzer 128 und das Dokument 100 sind einander zugeordnet; beispielsweise handelt es sich bei dem Dokument 100 um ein elektronisches Ausweisdokument des Nutzers 128, wie zum Beispiel dessen elektronischen Personalausweis. Bei dem in dem Speicher 104 gespeicherten Attribut 126 kann es sich zum Beispiel um den Namen, Vornamen, Geburtsdatum, den Wohnort oder andere personenbezogene Angaben zu dem Nutzer 128 handeln. Insbesondere kann es sich bei dem Attribut 126 auch um biometrische Daten des Nutzers 128, wie zum Beispiel Fingerabdruck- oder Irisscandaten handeln.

Der Prozessor 102 dient zur Ausführung eines Anwendungsprogramms 130, welches die das Dokument 100 betreffenden Schritte eines kryptografischen Protokolls implementiert, dessen erfolgreiche Durchführung Voraussetzung für einen Lesezugriff des Lesegeräts 115 auf das Attribut 126 ist. Durch ein Anwendungsprogramm 132 des Lesegeräts 115 werden die entsprechenden Schritte des kryptografischen Protokolls, die das Lesegerät 115 betreffen, lesegerätseitig implementiert. Bei dem kryptografischen Protokoll kann es zum Beispiel um ein Challenge-Response-Protokoll und/oder ein Diffie-Hellman-Protokoll zur Authentifizierung des Lesegeräts 115 gegenüber dem Dokument 100 handeln. Insbesondere kann es sich bei dem kryptografischen Protokoll um ein Basic Access Control- und/oder Extended Access Control-Protokoll oder ein PACE-Protokoll handeln.

Das Lesegerät 115 hat einen Signalgeber 134, der dazu dient, einen Umgebungszustand für das Dokument 100 zu schaffen, wenn sich das Dokument 100 innerhalb der Reichweite der Chipkarten-Schnittstelle 117 des Lesegeräts 115 befindet. Beispielsweise kann es sich bei dem Signalgeber 134 um eine Strahlungsquelle handeln, die den Sensor 106 mit einer Strahlung beaufschlagt, wenn das Dokument 100 in das Lesegerät 115 eingeführt oder auf das Lesegerät 115 aufgelegt ist.

Alternativ kann es sich bei dem Signalgeber 134 um zum Beispiel einen Permanentmagneten handeln, auf den der Sensor 106 positioniert werden muss, um den Umgebungszustand, das heißt hier das magnetische Feld, zu schaffen, was zu der Abgabe des Sensorsignals durch den Sensor 106 führt. Ferner kann es sich bei dem Signalgeber 134 auch um ein mechanisches Element handeln, was zum Beispiel beim Einführen des Dokuments 100 in das Lesegerät 115 oder beim Auflegen des Dokuments 100 auf des Lesegerät 115 einen Druck auf den Sensor 106 ausübt, wobei der Sensor 106 den entsprechenden Umgebungszustand mechanisch sensiert und das Sensorsignal abgibt.

Das Lesegerät 115 kann mit einem Display 136 verbunden sein, auf dem das Attribut 126 angezeigt werden kann. Falls es sich bei dem Attribut 126 um ein biometrisches Merkmal des Nutzers 128 handelt, kann das Lesegerät 115 einen Biometriesensor zur Erfassung dieses biometrischen Merkmals 128 von dem Nutzer aufweisen, um das erfasste biometrische Merkmal mit dem Attribut 126, das heißt hier dem biometrischen Referenzmerkmal, auf Übereinstimmung zu prüfen.

Solange der Umgebungszustand, der zur Abgabe des Sensorsignals führt, durch den Sensor 106 nicht erfasst wird, antwortet das Dokument 100 grundsätzlich nicht auf Kommandos des Lesegeräts 115, und zwar auch dann nicht, wenn sich das Dokument 100 in der Reichweite der Chipkarten-Schnittstelfe 117 oder einer anderen Chipkarten-Schnittstelle eines nicht autorisierten Lesegeräts befindet, und daher mit elektrischer Energie versorgt wird. Dies ist dadurch begründet, dass der initiale Freigabezustand F = 0, das heißt "gesperrt" ist, sodass schon die Initialisierung des Übertragungsprotokolls nicht erfolgen kann, weil das Programmmodul 114 nicht ausgeführt werden kann, und/oder das Programmmodul 112 nicht ausgeführt werden kann

Zum Lesen des Attributs 126 durch das Lesegerät 115 kann wie folgt vorgegangen werden:
1. Das Dokument 100 wird in die Reichweite der Chipkarten-Schnittstelle 117 des Lesegeräts 115 gebracht, sodass Energie in die Antenne 110 eingekoppelt wird und somit das Dokument 100, insbesondere der Chip 108, mit Energie versorgt wird. Daraufhin wird die Ausführung des Chipkartenbetriebssystems 122 automatisch durch den Prozessor 102 gestartet.
2. Das Dokument 100 wird relativ zu dem Lesegerät 115 so positioniert, dass der Sensor 106 in die Reichweite des Signalgebers 134 gebracht wird, beispielsweise indem der Sensor 106 auf oder unter dem Signalgeber 134 positioniert wird. Hierzu kann das Lesegerät 115 eine Positionierungshilfe, wie zum Beispiel eine Anlagekante, aufweisen, um das Dokument 100 dementsprechend zu positionieren. Aufgrund der Positionierung des Sensors 106 innerhalb der Reichweite des Signalgebers 134 sensiert der Sensor 106 einen vorbestimmten Umgebungszustand, wie zum Beispiel die Beaufschlagung des Sensors 106 durch den Signalgeber 134 mit Licht im sichtbaren und/oder unsichtbaren Bereich, in einen bestimmten Spektralbereich, einer bestimmten Modulation oder Pulssequenz und/oder die Beaufschlagung mit einem Magnetfeld oder einer mechanischen Kraft oder einem Druck, sodass der Sensor das Sensorsignal abgibt, welches das Chipkartenbetriebssystem 122 empfängt und daraufhin den Freigabezustand "freigegeben" in dem flüchtigen Speicher 124 speichert, das heißt F = 1.
3. Sendet nun das Lesegerät 115 von seiner Chipkarten-Schnittstelle 117 ein Initialisierungskommando IK 138 an das Dokument 100, so startet das Chipkartenbetriebssystem 122 die Ausführung des Programmmoduls 114, da der Freigabezustand F = 1 ist, was die Freigabe der Ausführung der Programmmodule 112 und 114 anzeigt. Aufgrund des Initialisierungskommandos 138 greift das Programmmodul 114 auf den Speicher 104 zu, um die Initialisierungsparameter 120 auszulesen, und um eine Antwort IP 140 auf das Initialisierungskommando 138 zu generieren, die eine oder mehrere der Initialisierungsparameter 120 beinhaltet. Diese Antwort 140 wird dann von dem Dokument 100 an das Lesegerät 115 übertragen und dort von der Chipkarten-Schnittstelle 117 empfangen. Anschließend wird durch das Programm 132 des Lesegeräts 115 ein Kommando GC 142 generiert, um die Ausführung des kryptografischen Protokolls zu starten. Hierbei kann es sich zum Beispiel um das Kommando "Get Challenge" handeln, um das Dokument 100 zur Erzeugung einer Challenge für die Durchführung eines Challenge-Response-Protokolls zum Zwecke der Authentifizierung des Lesegeräts 115 gegenüber dem Dokument 100 aufzufordern und in Form einer Antwort auf das Kommando 142 an das Lesegerät 115 zu senden. Das Kommando 142 wird entsprechend dem zumindest einen Initialisierungsparameter 120, den das Lesegerät zuvor mit der Antwort 140 empfangen hat, erzeugt und gesendet. Da der Freigabezustand F = 1 in dem flüchtigen Speicher 124 gespeichert ist, wird die Ausführung des Programmmoduls 112 gestartet, um das Kommando 142 zu empfangen und durch Ausführung des Anwendungsprogramms 130 zu verarbeiten, indem nämlich beispielsweise eine Challenge C erzeugt wird. Die entsprechende Antwort 144 mit der Challenge C wird dann durch Ausführung des Programmmoduls 112 an die Chipkarten-Schnittstelle 117 des Lesegeräts 115 gesendet. Für die weitere Ausführung des kryptografischen Protokolls zur Authentifizierung des Lesegeräts 115 gegenüber dem Dokument 100 werden weitere Kommandos 142 und Antworten 144 zwischen dem Lesegerät 115 und dem Dokument 100 ausgetauscht, wobei die Anzahl der Kommandos 142 und der entsprechenden Antworten 144 von dem konkreten kryptografischen Protokoll abhängt. Im Weiteren wird ohne Beschränkung der Allgemeinheit davon ausgegangen, dass für die Durchführung des kryptografischen Protokolls zur Authentifizierung des Lesegeräts 115 gegenüber dem Dokument und gegebenenfalls zur Authentifizierung des Dokuments 100 gegenüber dem Lesegerät 115 eine bestimmte Anzahl von N Kommandos 142 und entsprechenden Antworten 144 erforderlich sind.
4. Nachdem dieses kryptografische Protokoll erfolgreich durchgeführt worden ist und somit das Lesegerät 115 gegenüber dem Dokument authentifiziert ist und gegebenenfalls auch das Dokument 100 gegenüber dem Lesegerät 115, generiert das Anwendungsprogramm 132 ein Lesekommando L 146, welches durch Ausführung des Programmmoduls 112 von dem Dokument 100 empfangen und von dem Anwendungsprogramm 130 dahingehend verarbeitet wird, dass das zumindest eine Attribut 126 aus dem Speicher 104 ausgelesen wird und eine Antwort A 148 daraufhin erzeugt und durch Ausführung des Programmmoduls 112 an das Lesegerät 115 gesendet wird, welches diese zumindest eine Attribut 126 beinhaltet. Das Attribut 126 kann dann auf dem Display 136 des Lesegeräts 115 zum Beispiel für eine Ausweiskontrolle angezeigt werden.

Wird das Dokument 100 anschließend aus der Reichweite der Chipkarten-Schnittstelle 117 des Lesegeräts 115 entfernt, so wird der flüchtige Speicher 124 gelöscht und fällt auf seinen initialen Wert F = 0 zurück.

Nach einer Ausführungsform der Erfindung bleibt der Wert von F = 1 bestehen, nachdem F durch das Chipkartenbetriebssystem 122 von 0 auf 1 gesetzt worden ist, und zwar während der gesamten Zeitdauer, während derer sich das Dokument 100 innerhalb der Reichweite der Chipkarten-Schnittstelle 117 befindet und somit unterbrechungsfrei mit Energie versorgt wird. Erst wenn die Energieversorgung unterbrochen wird, das heißt wenn das Dokument 100 von dem Lesegerät 115 entfernt wird, fällt der Zustand von F wieder von 1 auf 0 zurück.

In einer weiteren Ausführungsform der Erfindung gilt der Freigabezustand nur für eine vorgegebene Höchstanzahl von Antworten 144, 148. Beispielsweise ist diese Höchstanzahl von Antworten N + 1, das heißt die Anzahl der Antworten N für die Durchführung des kryptografischen Protokolls plus der Antwort 148 für die Übertragung des zumindest einen Attributs 126. In diesem Fall wird F = N + 1 gesetzt und das Betriebssystem 122 dekrementiert F mit jeder Antwort 144 und 148, sodass schließlich nach Beendigung des Auslesens F = 0 ist, und zwar auch dann, wenn sich das Dokument 100 noch innerhalb der Reichweite des Lesegeräts 115 und insbesondere der Sensor 106 innerhalb der Reichweite des Signalgebers 134 befindet.

Wenn anschließend das Lesegerät 115 erneut zum Beispiel ein Kommando 142 sendet, fragt das Betriebssystem 122 den Sensor 106 ab, sodass der Sensor 106 das Sensorsignal abgibt, welches das Vorliegen des vorgegebenen Umgebungszustandes anzeigt, nämlich die Beaufschlagung des Sensors 106 durch den Signalgeber 134, sodass das Betriebssystem F wieder auf N + 1 setzt. Statt N + 1 kann auch ein etwas größerer Wert gewählt werden.

Eine weitere Möglichkeit ist, dass mit dem Setzen von F auf logisch 1 das Chipkartenbetriebssystem 122 einen Timer startet. Sobald der Timer nach einer vorgegebenen Zeitdauer abgelaufen ist, setzt das Chipkartenbetriebssystem 122 den Wert von F wieder auf 0 zurück. Wenn das Lesegerät 115 dann erneut zum Beispiel ein Kommando 142 sendet, fragt das Chipkartenbetriebssystem 122 wiederum den Sensor 106 ab, um gegebenenfalls F wieder auf 1 zu setzen.

Nach einer weiteren Ausführungsform der Erfindung ist das Chipkartenbetriebssystem 122 zur Abgabe eines Fehlersignals ausgebildet, wenn das Dokument ein ungültiges Kommando empfängt. Ein Senden einer Antwort mit diesem Fehlersignal auf ein solches ungültiges Kommando erfolgt aber nur dann, wenn der Wert von F den Freigabezustand für die Ausführung der Programmmodule 112 und 114 anzeigt; ansonsten wird eine Antwort mit einem Fehlersignal auf das ungüitige Kommando von dem Dokument 100 nicht gesendet, um ein entsprechendes unautorisiertes Tracking des Nutzers 128 zu unterbinden.

Nach einer Ausführungsform der Erfindung hat das Lesegerät 115 einen optischen Scanner zur Erfassung einer sogenannten MRZ (Machine Readable Zone) 150 des Dokuments 100. Für die Durchführung des BAC-/PACE-Protokolls ist es erforderlich, dass zunächst die MRZ von dem Lesegerät 115 eingescannt wird, um daraus die für die anschließende Durchführung des kryptografischen Protokolls erforderlichen Schlüssel zu gewinnen. Vorzugsweise handelt es sich in diesem Fall bei dem Signalgeber 134 um eine Lichtquelle des optischen Scanners, die ohnehin vorhanden sein muss und somit eine doppelte Verwendung findet. Beispielsweise liefert die Lichtquelle, das heißt der Signalgeber 134, Licht im Bereich zwischen 850 nm und 950 nm mit einem Maximum bei 900 nm, welches auch als B900-Band bezeichnet wird.

Nach einer weiteren Ausführungsform der Erfindung sendet der Signalgeber 134 eine Signalsequenz von spezifischen Lichtsignalen unterschiedlicher Wellenlänge ab, wie zum Beispiel einen ersten Puls von 200 ms Länge von Strahlung im Infrarotbereich, gefolgt von einem Puls von 500 ms Länge von Strahlung im sichtbaren Bereich. Auch komplexere Signalsequenzen können vordefiniert sein, deren Erfassung Voraussetzung für die Abgabe des Sensorsignals durch den Sensor 106 sind.

Nach einer Ausführungsform der Erfindung entspricht die von den Chipkarten-Schnittstellen 117 des Lesegeräts 115 und des Dokuments 100 gebildete Kommunikations-Schnittstelle dem Standard ISO/IEC 14443-4. In diesem Fall handelt es sich bei dem Initialisierungskommando 138 um das Request for Answer to Select (RATS)-Kommando. Bei der Antwort 140, die das Dokument 100 daraufhin an das Lesegerät 115 sendet, sofern der Freigabezustand vorliegt, das heißt F ungleich 0, handelt es sich um Answer to Select (ATS). Bei den Initialisierungsparametern 120 handelt es sich dann beispielsweise um einen oder mehrere der folgenden Protokollparameter:

| **Parameter** | **Beschreibung** |
|---|---|
| FSCI | Frame Size Card Integer: maximale Anzahl der Bytes, die in einem Block vom Lesegerät 115 an das Dokument 100 gesendet werden dürfen |
| DS | Data Rate Sent: unterstützte Datenraten des Dokuments 100 bei der Datenübertragung von dem Dokument 100 zum Lesegerät 115; mögliche Werte sind 106, 204, 408, 816 kBit/s |
| DR | Data Rate Sent: unterstützte Datenraten des Dokuments 100 bei der Datenübertragung vom Lesegerät 115 zum Dokument 100; die möglichen Werte sind wie bei DS |
| FWI | Frame Waiting Integer: Dieser Parameter definiert die "Frame Waiting Time", also die maximale Zeit, die das Lesegerät 115 nach der Aussendung eines Kommandos auf die Antwort des Dokuments zu warten hat. Wurde nach Ablauf dieser Zeit keine Antwort von dem Dokument 100 empfangen, so tritt ein "Timeout"-Fehler in der Kommunikation auf. |

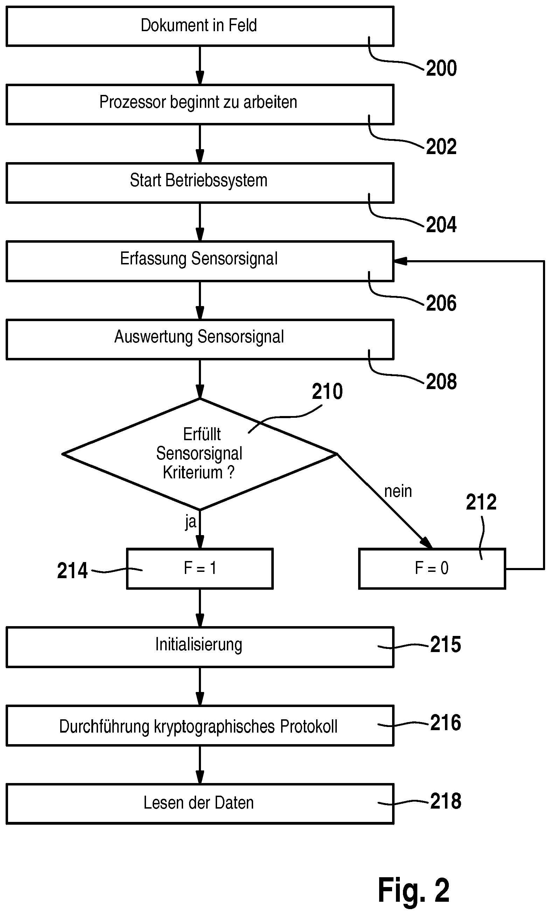

Die Figur 2 zeigt ein entsprechendes Flussdiagramm. In dem Schritt 200 wird das Dokument 100 in die Reichweite der Chipkarten-Schnittstelle 117 gebracht und mit seinem Sensor 106 so positioniert, dass sich der Sensor 106 in der Reichweite des Signalgebers 134 befindet.

In dem Schritt 202 beginnt der Prozessor 102 des Dokuments 100 aufgrund der Einkopplung von elektrischer Energie in die Antenne 110 zu arbeiten und startet in dem Schritt 204 das Chipkartenbetriebssystem 122. Das Chipkartenbetriebssystem 122 fragt dann von dem Sensor 106 ein Sensorsignal zur Erfassung eines Umgebungszustandes der Umgebung des Sensors 106 ab, nämlich, ob sich der Sensor 106 innerhalb der Reichweite des Signalgebers 134 befindet.

Ein entsprechendes Sensorsignal wird in dem Schritt 206 erfasst und in dem Schritt 208 ausgewertet. In dem Schritt 210 wird geprüft, ob das Sensorsignal ein vorgegebenes Kriterium erfüllt, ob beispielsweise Licht einer vorgegebenen Intensität, Wellenlänge, Modulation oder Pulssequenz empfangen wurde oder ob eine vorgegebene Beaufschlagung mit einem elektromagnetischen Feld vorliegt oder ob eine vorgegebene mechanische Kraft oder ein mechanischer Druck auf den Sensor 106 ausgeübt wird. Für den Fall, dass das Kriterium nicht erfüllt ist, bleibt in dem Schritt 212 der Freigabezustand F unverändert auf seinem initialen Zustand, das heißt F = 0. Nach einem vorgegebenen Zeitintervall kann von dem Schritt 212 zu dem Schritt 206 zurückgegangen werden, um erneut den Versuch zu unternehmen, ein valides Sensorsignal von dem Sensor 106 zu empfangen, welches das vorgegebene Kriterium erfüllt, damit auf den Schritt 210 der Schritt 214 folgen kann, in dem der Freigabezustand F = 0 auf F = 1 gesetzt wird.

Anschließend erfolgt dann in dem Schritt 215 die Initialisierung des Übertragungsprotokolls und dann in dem Schritt 216 die Durchführung eines kryptografischen Protokolls als Voraussetzung für das anschließende Lesen von Daten, beispielsweise des Attributs 126, durch das Lesegerät 115 aus dem Dokument 100 in dem Schritt 218.

Je nach Ausführungsform kann aber der Schritt 215, d.h. die Initialisierung des Übertragungsprotokolls, auch bereits vor dem Schritt 210 ausgeführt werden, so dass der transport layer unabhängig von dem Sensorsignal aufgebaut wird. In diesem Fall hängt die Ausführung des Programmmoduls 112 von dem Ergebnis des Schritt 210 ab, d.h. das Programmmodul 112 wird zum Beantworten von Kommando APDUs nur dann gestartet, wenn das Sensorsignal das Kriterium erfüllt.

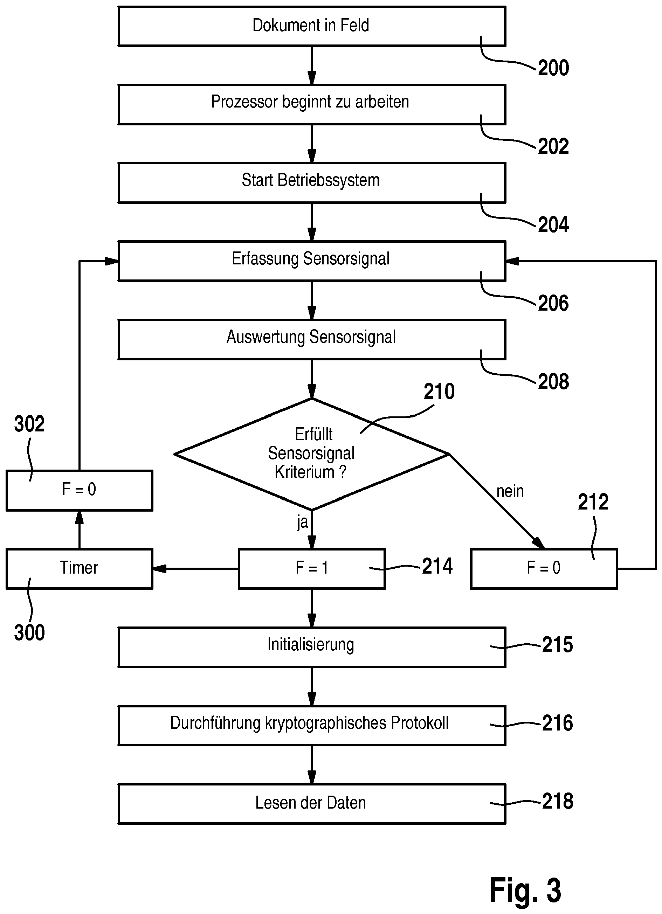

Die Figur 3 zeigt eine weitere Ausführungsform der Erfindung, wobei im Unterschied zu der Ausführungsform gemäß Figur 2 der Freigabezustand in dem Schritt 214 nur für eine bestimmte Zeitdauer auf F = 1 gesetzt wird, indem nämlich nach dem Schritt 214 in dem Schritt 300 durch das Chipkartenbetriebssystem 122 ein Timer gestartet wird. Nachdem der Timer abgelaufen ist, wird in dem Schritt 302 F von dem Chipkartenbetriebssystem 122 wieder auf 0 gesetzt. Es wird dann zu dem Schritt 206 zurückgegangen, um das Sensorsignal erneut zu erfassen.

Der Wert des Timers ist dabei so gewählt, dass die Schritte 215, 216 und 218 vor Ablauf des Timers durchgeführt werden können.

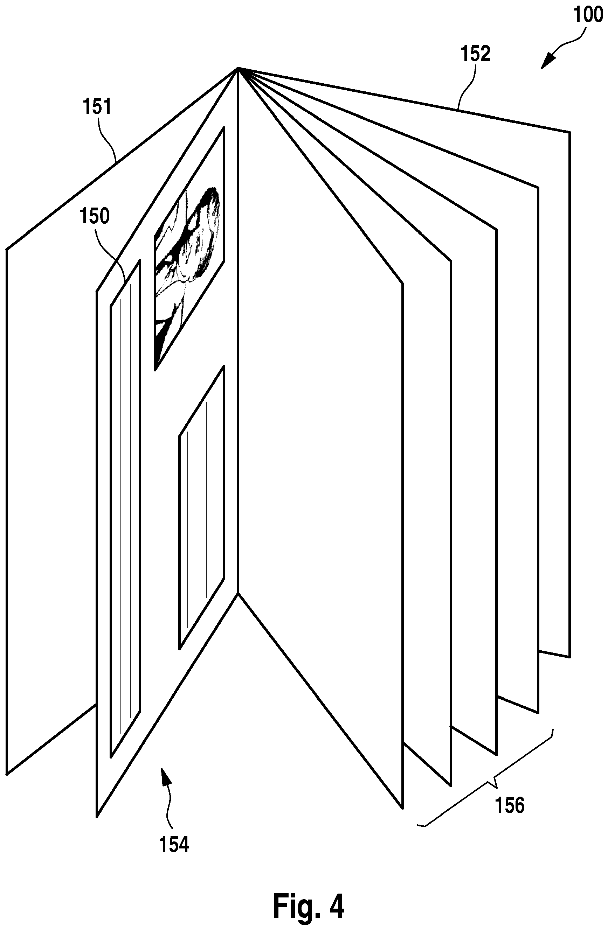

Die Figur 4 zeigt eine Ausführungsform des Dokuments 100 als buchförmiges Dokument, insbesondere als elektronischer Personalausweis. Das Dokument hat einen vorderen Buchdeckel 151 und einen hinteren Buchdeckel 152, eine Personalisierseite 154 sowie Innenbögen 156.

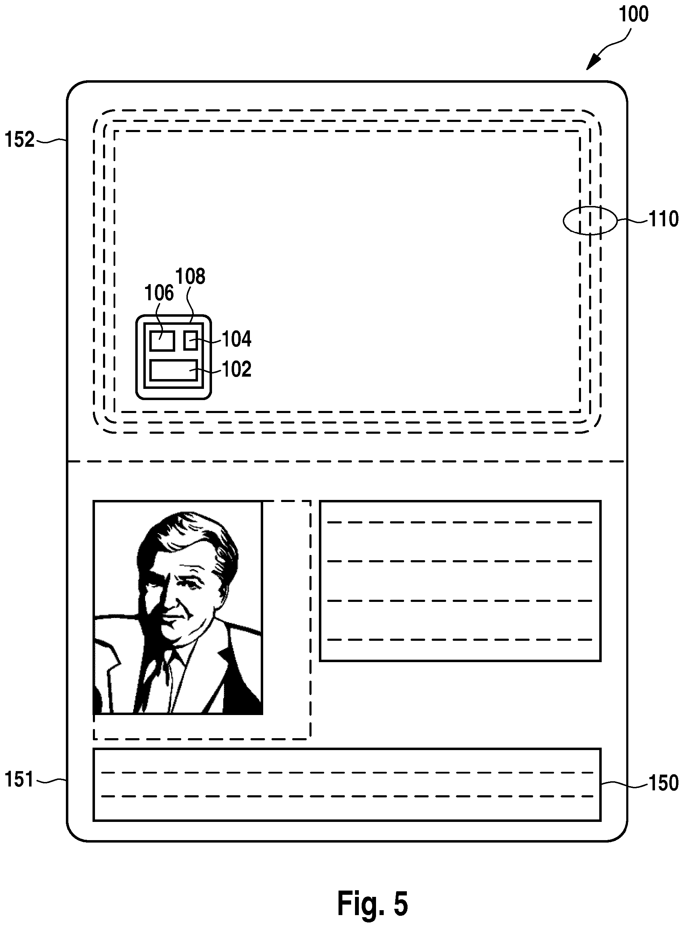

Die Figur 5 zeigt das Dokument 100 in aufgeschlagenem Zustand. Wie in der Figur 5 dargestellt, ist bei der hier betrachteten Ausführungsform der Chip 108 in den Buchdeckel 152 integriert, sowie auch die Antenne 110. Bei dem Sensor 106 kann es sich hier um einen optischen Sensor handeln, der das Sensorsignal abgibt, sobald Licht auf den Sensor fällt. Licht kann nämlich nur dann auf den Sensor 106 fallen, wenn der Nutzer das Dokument 100 aufklappt. Dadurch ist sichergestellt, dass nicht unbemerkt von dem Nutzer 128 ein Tracking erfolgen kann.

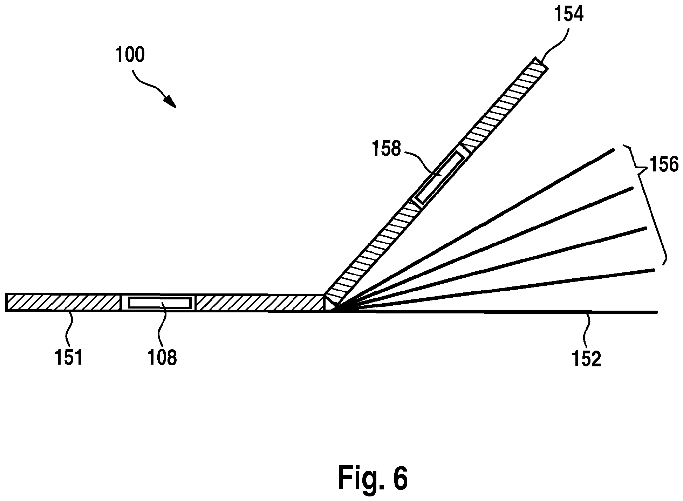

Die Figur 6 zeigt eine weitere Ausführungsform der Erfindung, bei der der Sensor 106 als Magnetsensor ausgebildet ist, wie zum Beispiel als ein sogenannter Reed-Schalter. Der Chip 108 ist bei der hier betrachteten Ausführungsform in dem Buchdeckel 151 integriert. Auf der Personalierseite 154 ist ein Permanentmagnet 158 angeordnet, zum Beispiel in Form einer permanentmagnetischen Folie, die sich als Inlay in der Personalierseite 154 befindet.

Solange das Dokument 100 geschlossen ist, befindet sich der Permanentmagnet 158 über dem Sensor 106, sodass der Reed-Schalter einen ersten Schaltzustand hat, z.B. geschlossen ist. Dieser Zustand bedeutet zugleich F = 0. Wird hingegen das Dokument 100 aufgeklappt, wie in der Figur 6 gezeigt, so wird der Sensor 106, das heißt hier der Read-Schalter, nicht mehr mit dem Magnetfeld des Permanentmagneten 158 beaufschlagt, sodass der Read-Schalter einen zweiten Schaltzustand, beispielsweise geöffnet, einnimmt. Die Abfrage des Schaltzustands durch das Chipkartenbetriebssystem 122 hat dann den Übergang von F = 0 auf F = 1 zufolge.

### Bezugszeichenliste

- 100: Dokument
- 102: Prozessor
- 104: nicht-flüchtiger Speicher
- 106: Sensor
- 108: Chip
- 110: Antenne
- 112: Programmmodul
- 114: Programmmodul
- 115: Lesegerät
- 117: Chipkarten-Schnittstelle
- 120: Initialisierungsparameter
- 122: Chipkartenbetriebssystem
- 124: flüchtiger Speicher
- 126: Attribut
- 128: Nutzer
- 130: Anwendungsprogramm
- 132: Anwendungsprogramm
- 134: Signalgeber
- 136: Display
- 138: Initialisierungskommando
- 140: Antwort
- 142: Kommando
- 144: Antwort
- 146: Lesekommando
- 148: Antwort
- 150: Machine Readable Zone (MRZ)
- 151: Buchdeckel
- 152: Buchdeckel
- 154: Personalisierseite
- 156: Innenbögen
- 158: Permanentmagnet

## Patentansprüche

1. Dokument mit
- einer kontaktlosen Chipkartenschnittstelle (110, 114) zur Kommunikation mit einem Lesegerät (115) nach einem Request-Response-Übertragungsprotokoll und zur Einkopplung von elektromagnetischer Energie von dem Lesegerät zur Energieversorgung des Dokuments, wobei die Chipkartenschnittstelle eine erste Übertragungsprotokollkomponente (114) zum Senden von Protokollparametern für eine Initialisierung des Übertragungsprotokolls aufgrund des Empfangs eines Initialisierungskommandos (138) und eine zweite Übertragungsprotokollkomponente (112) zur Übertragung von Anwendungsdaten nach der Initialisierung des Übertragungsprotokolls mit Hilfe der Protokollparameter aufweiset, wobei die zweite Übertragungsprotokollkomponente dazu ausgebildet ist zumindest ein Lesekommando (146) zum Lesen von Anwendungsdaten zu empfangen und daraufhin eine Antwort (148) mit den Anwendungsdaten zu senden,
- einem Prozessor (102) zur Ausführung der ersten und zweiten Übertragungsprotokollkomponenten, eines Chipkartenbetriebssystems (122) und eines Anwendungsprogramms (130),
- einem Sensor (106) zur Abgabe eines Sensorsignals zur Erfassung eines Umgebungszustands,
- einem flüchtigen Speicher (124) zur Speicherung eines Freigabezustands der Ausführung der ersten und zweiten Übertragungsprotokollkomponenten, wobei der Freigabezustand einen ersten logischen Wert und einen zweiten logischen Wert annehmen kann, wobei der erste logische Wert eine Sperrung der Ausführung der ersten und/oder zweiten Übertragungsprotokollkomponenten angibt und der zweite logischen Wert eine Freigabe für die Ausführung der ersten und zweiten Übertragungsprotokollkomponenten angibt, wobei der Freigabezustand initial den ersten logischen Wert hat,
- einem nicht-flüchtigen Speicher (104), in dem Anwendungsdaten gespeichert sind, die zumindest ein Attribut (126) eines Nutzers (128) beinhalten, der dem Dokument zugeordnet ist,
wobei das Chipkartenbetriebssystem zum Empfang des Sensorsignals und aufgrund des Empfangs des Sensorsignals zur Speicherung des zweiten logischen Werts des Freigabezustands in dem flüchtigen Speicher ausgebildet ist,
wobei das Anwendungsprogramm ein kryptographisches Protokoll implementiert, so dass Aufgrund eines Lesekommandos (146) zum Lesen des Attributs nur dann eine Antwort (148) mit dem Attribut erzeugt und mit Hilfe der zweiten Übertragungsprotokollkomponente gesendet wird, wenn zuvor das kryptographische Protokoll erfolgreich durchgeführt worden ist und wenn in dem flüchtigen Speicher der zweite logische Wert des Freigabezustands gespeichert ist.

2. Dokument nach Anspruch 1, wobei der erste logische Wert eine Sperrung der Ausführung der ersten und zweiten Übertragungsprotokollkomponenten angibt, wobei das Chipkartenbetriebssystem so ausgebildet ist, dass es aufgrund des Empfangs des Initialisierungskommandos nur dann die erste Übertragungsprotokollkomponente zum Senden einer Antwort mit den Protokollparametern auf das Initialisierungskommando ansteuert, wenn in dem flüchtigen Speicher der zweite logische Wert des Freigabezustands gespeichert ist.

3. Dokument nach Anspruch 1 oder 2, wobei das Chipkartenbetriebssystem zur Erzeugung eines Fehlersignals als Antwort auf ein empfangenes ungültiges Kommando ausgebildet ist, wobei die Antwort mit dem Fehlersignal nur dann gesendet wird, wenn in dem flüchtigen Speicher der zweite logische Wert des Freigabezustands gespeichert ist.

4. Dokument nach Anspruch 1, 2 oder 3, wobei für die Durchführung des kryptografischen Protokolls und das Lesen des Attributs eine Mindestanzahl (N+1) von Antworten erforderlich ist, wobei der Freigabezustand nur für eine vorgegebene Höchstanzahl von Antworten gilt, wobei die Höchstanzahl größer oder gleich der Mindestanzahl ist.

5. Dokument nach Anspruch 4, wobei das Chipkartenbetriebssystem zur Erfassung des zeitlichen Abstands zwischen aufeinanderfolgenden Kommandos, die zur Durchführung des kryptografischen Protokolls empfangen werden, ausgebildet ist, und zum Vergleich eines erfassten zeitlichen Abstands mit einem vorgegebenen Schwellwert, wobei das Chipkartenbetriebssystem dazu ausgebildet ist, den Freigabezustand auf den ersten logischen Wert zurückzusetzen, wenn der Schwellwert überschritten wird, um die Durchführung des kryptografischen Protokolls abzubrechen.

6. Dokument nach einem der vorhergehenden Ansprüche, wobei der zweite logische Wert des Freigabezustands für eine vorgegebene Zeitdauer gilt.

7. Dokument nach einem der vorhergehenden Ansprüche, wobei der zweite logische Wert des Freigabezustands für eine vorgegebene Anzahl von Antworten gilt.

8. Dokument nach einem der vorhergehenden Ansprüche, wobei es sich bei dem Sensor um einen optischen Sensor, einen Magnetsensor oder einen mechanischen Sensor handelt.

9. Dokument nach Anspruch 8, wobei der Sensor als optischer Sensor ausgebildet ist, der das Sensorsignal dann abgibt, wenn Strahlung in einen sichtbaren und/oder unsichtbaren Frequenzbereich von dem Sensor erfasst wird.

10. Dokument nach Anspruch 9, wobei der Sensor zur Detektion einer vorgegebenen Signalsequenz ausgebildet ist und das Sensorsignal aufgrund der Erfassung der Signalsequenz abgibt.

11. Dokument nach einem der vorhergehenden Ansprüche, wobei das Dokument buchförmig ausgebildet ist, wobei auf einer Seite (154) oder einem Buchdeckel (151,152) des Dokuments ein Signalgeber (158) so angeordnet ist, dass ein Aufschlagen des Dokuments zur Abgabe des Sensorsignals führt.

12. Dokument nach Anspruch 11, wobei es sich bei dem Signalgeber um einen Permanentmagneten handelt.

13. Dokument nach einem der vorhergehenden Ansprüche, wobei es sich um ein Wert- oder Sicherheitsdokument , insbesondere eine Chipkarte oder ein elektronisches Ausweisdokument handelt.

14. Elektronisches System mit einem Dokument (100) nach einem der vorhergehenden Ansprüche und dem Lesegerät (115).

15. Elektronisches System nach Anspruch 14, wobei das Lesegerät einen Signalgeber (134) beinhaltet, der dazu ausgebildet ist, das Sensorsignal des Sensors auszulösen.

## Claims

1. A document having
- a contactless chip card interface (110, 114) for communicating with a reader (115) on the basis of a request-response transmission protocol and for coupling in electromagnetic energy from the reader in order to supply power to the document, wherein the chip card interface has a first transmission protocol component (114) for sending protocol parameters for initialising the transmission protocol on the basis of the receipt of an initialisation command (138) and a second transmission protocol component (112) for transmitting application data following the initialisation of the transmission protocol with the aid of the protocol parameters, wherein the second transmission protocol component is designed to receive at least one read command (146) for reading application data and to then send a response (148) containing the application data,
- a processor (102) for executing the first and second transmission protocol components, a chip card operating system (122) and an application program (130),
- a sensor (106) for outputting a sensor signal for sensing an ambient state,
- a volatile memory (124) for storing an enable state for executing the first and second transmission protocol components, wherein the enable state can assume a first logic value and a second logic value, wherein the first logic value indicates disablement of the execution of the first and/or second transmission protocol components and the second logic value indicates enablement for execution of the first and second transmission protocol components, wherein the enable state initially has the first logic value,
- a non-volatile memory (104), in which application data containing at least one attribute (126) of a user (128) associated with the document are stored,
wherein the chip card operating system is designed to receive the sensor signal and, on the basis of the receipt of the sensor signal, to store the second logic value of the enable state in the volatile memory,
wherein the application program implements a cryptographic protocol, so that, on the basis of a read command (146) for reading the attribute, a response (148) containing the attribute is produced, and sent with the aid of the second transmission protocol component, only if the cryptographic protocol has been performed successfully beforehand and if the second logic value of the enable state is stored in the volatile memory.

2. The document according to claim 1, wherein the first logic value indicates disablement of the execution of the first and second transmission protocol components, wherein the chip card operating system is designed so that, on the basis of the receipt of the initialisation command, it activates the first transmission protocol component to send a response to the initialisation command, said response containing the protocol parameters, only if the second logic value of the enable state is stored in the volatile memory.

3. The document according to claim 1 or 2, wherein the chip card operating system is designed to generate an error signal in response to a received invalid command, wherein the response containing the error signal is sent only if the second logic value of the enable state is stored in the volatile memory.

4. The document according to claim 1, 2 or 3, wherein a minimum number (N+1) of responses is necessary for executing the cryptographic protocol and reading the attribute, wherein the enable state is valid only for a predefined maximum number of responses, wherein the maximum number is greater than or equal to the minimum number.

5. The document according to claim 4, wherein the chip card operating system is designed to detect the time interval between successive commands received in order to execute the cryptographic protocol, and to compare a detected time interval with a predefined threshold value, wherein the chip card operating system is designed to reset the enable state to the first logic value if the threshold value is exceeded so as to abort the execution of the cryptographic protocol.

6. The document according to any one of the preceding claims, wherein the second logic value of the enable state is valid for a predefined period of time.

7. The document according to any one of the preceding claims, wherein the second logic value of the release state is valid for a predefined number of responses.

8. The document according to any one of the preceding claims, wherein the sensor is an optical sensor, a magnetic sensor, or a mechanical sensor.

9. The document according to claim 8, wherein the sensor is designed as an optical sensor, which outputs the sensor signal if radiation in a visible and/or invisible frequency range is detected by the sensor.

10. The document according to claim 9, wherein the sensor is designed to detect a predefined signal sequence, and outputs the sensor signal on the basis of the detection of the signal sequence.

11. The document according to any one of the preceding claims, wherein the document is book-like, wherein a signal transmitter (158) is arranged on a page (154) or a book cover (151, 152) of the document, so that opening the document causes the sensor signal to be output.

12. The document according to claim 11, wherein the signal transmitter is a permanent magnet.

13. The document according to any one of the preceding claims, wherein the document is a document of value or security document, in particular a chip card or an electronic identity document.

14. An electronic system comprising a document (100) according to any one of the preceding claims and the reader (115).

15. The electronic system according to claim 14, wherein the reader includes a signal transmitter (134), which is designed to trigger the sensor signal of the sensor.

## Revendications

1. Document doté
- d'une interface de carte à puce sans contact (110, 114) servant à la communication avec un lecteur (115) selon un protocole de transmission question-réponse et pour l'injection d'énergie électromagnétique du lecteur vers l'alimentation en énergie du document, où l'interface de carte à puce présente une première composante de protocole de transmission (114) pour l'envoi de paramètres de protocole pour une initialisation du protocole de transmission en raison de la réception d'une commande d'initialisation (138) et une deuxième composante de protocole de transmission (112) pour la transmission de données d'application après l'initialisation du protocole de transmission à l'aide des paramètres de protocole, où la deuxième composante de protocole de transmission est conçue pour recevoir au moins une commande de lecture (146) pour lire des données d'application et ensuite envoyer une réponse (148) avec les données d'application,
- d'un processeur (102) pour l'exécution des première et deuxième composantes de protocole de transmission d'un système de fonctionnement de carte à puce (122) et d'un programme d'application (130),
- d'un capteur (106) pour la délivrance d'un signal de capteur pour la détection d'un état d'environnement,
- d'une mémoire volatile (124) pour le stockage d'un état de validation de l'exécution des première et deuxième composantes de protocole, où l'état de validation peut adopter une première valeur logique et une deuxième valeur logique, où la première valeur logique indique un blocage de l'exécution de la première et/ou de la deuxième composante de protocole de transmission et la deuxième valeur logique indique une libération pour l'exécution de la première et de la deuxième composantes de protocole de transmission, où l'état de validation a initialement une première valeur logique,
- d'une mémoire non volatile (104), dans laquelle sont stockées les données d'application qui contiennent au moins un attribut (126) d'un utilisateur (128), qui est associé au document,
où le système de fonctionnement de carte à puce est conçu pour la réception d'un signal de capteur et, en raison de la réception du signal de capteur, pour le stockage de la deuxième valeur logique de l'état de validation dans la mémoire volatile,
où le programme d'application met en oeuvre un protocole cryptographique de sorte qu'en raison d'une commande de lecture (146) pour la lecture de l'attribut, une réponse (148) n'est générée avec l'attribut que si le protocole cryptographique a été exécuté avec succès auparavant et a été envoyé à l'aide de la deuxième composante de protocole de transmission, et si la deuxième valeur logique de l'état de validation a été stockée dans la mémoire volatile.

2. Document selon la revendication 1, où la première valeur logique indique un blocage de l'exécution des première et deuxième composantes de protocole de transmission, où le système de fonctionnement de carte à puce est conçu de telle manière qu'en raison de la réception de la commande d'initialisation, la première composante de protocole de transmission ne démarre l'envoi d'une réponse avec les paramètres de protocole suite à la commande d'initialisation que lorsque la deuxième valeur logique de l'état de validation est stockée dans la mémoire volatile.

3. Document selon la revendication 1 ou 2, où le système de fonctionnement de la carte à puce est conçu pour la génération d'un signal d'erreur en tant que réponse à une commande non valide reçue, où la réponse est envoyée avec le signal d'erreur uniquement si la deuxième valeur logique de l'état de validation est stockée dans la mémoire volatile.

4. Document selon la revendication 1,2 ou 3, où, pour l'exécution du protocole cryptographique et la lecture de l'attribut, un nombre minimal (N + 1) de réponses est nécessaire, où l'état de validation n'est valable que pour un nombre maximal prédéfini de réponses, où le nombre maximal est supérieur ou égal au nombre minimal.

5. Document selon la revendication 4, où le système de fonctionnement de carte à puce est conçu pour la détection de l'écart temporel entre des commandes se succédant les unes aux autres qui sont reçues pour l'exécution du protocole cryptographique, et pour la comparaison d'un écart temporel détecté avec une valeur de seuil prédéfinie, où le système de fonctionnement de carte à puce est conçu pour remettre l'état de validation à la première valeur logique lorsque la valeur de seuil est dépassée, afin d'interrompre l'exécution du protocole cryptographique.

6. Document selon l'une des revendications précédentes, où la deuxième valeur logique de l'état de validation est valable pour une durée prédéfinie.

7. Document selon l'une des revendications précédentes, où la deuxième valeur logique de l'état de validation est valable pour un nombre prédéfini de réponses.

8. Document selon l'une des revendications précédentes, où, dans le cas du capteur, il s'agit d'un capteur optique, un capteur magnétique ou un capteur mécanique.

9. Document selon la revendication 8, où le capteur est conçu sous la forme d'un capteur optique qui n'indique le signal de capteur que si un rayonnement dans le domaine de fréquences visible et/ou non visible est détecté par le capteur.

10. Document selon la revendication 9, où le capteur est conçu pour la détection d'une fréquence de signal prédéfinie et indique le signal de capteur en raison de la détection de la fréquence de signal.

11. Document selon l'une des revendications précédentes, où le document est conçu sous la forme d'un livre, où un indicateur de signal (158) est disposé sur une page (154) ou une couverture de livre (151, 152) du document de sorte qu'une ouverture du document conduit à l'indication du signal de capteur.

12. Document selon la revendication 11, où, dans le cas de l'indicateur de signal, il s'agit d'un aimant permanent.

13. Document selon l'une des revendications précédentes, où il s'agit d'un document de valeur ou de sécurité, notamment d'une carte à puce ou d'un document d'identité électronique.

14. Système électronique doté d'un document (100) selon l'une des revendications précédentes et d'un lecteur (115).

15. Système électronique selon la revendication 14, où l'appareil de lecture contient un indicateur de signal (134) qui est conçu pour libérer le signal de capteur du capteur.
